# FASCICULE DE BREVET EUROPEEN

(11) **EP 1 300 314 B1**
(45) Date de publication et mention de la délivrance du brevet: **13.12.2006**
(21) Numéro de dépôt: 02292212.4
(22) Date de dépôt: 10.09.2002
(51) Int. Cl.: B61D 27/00, B60H 1/00

(54) **Dispositif de distribution de l'air conditionné dans une salle de voyageurs de véhicule ferroviaire**
Vorrichtung zur Verteilung klimatisierter Luft im Passagierraum eines Schienenfahrzeugs
Device for the distribution of conditioned air in the passenger room of a railway vehicle

(30) Priorité: 04.10.2001 FR 0112785
(43) Date de publication de la demande: 09.04.2003
(73) Titulaire: Alstom, 92300 Levallois-Perret (FR)
(72) Inventeur: Mineaud, Gérard, 17180 Perigny (FR); Plichon, Daniel, 17140 Lagord (FR)
(74) Mandataire: Blot, Philippe Robert Emile

(56) Documents cités:
- EP-A- 0 239 548
- DE-A- 2 145 744
- US-A- 3 330 200

## Description

L'invention se rapporte à un dispositif de distribution de l'air conditionné dans une salle de voyageurs de véhicule ferroviaire comprenant un conduit s'étendant en partie inférieure d'une paroi latérale de la salle et comportant des moyens pour répartir l'air vers le haut et vers le bas de la paroi latérale, les moyens de répartition comprenant dans une zone intermédiaire une ouverture par laquelle l'air contenu dans le véhicule est aspiré à l'intérieur des moyens de répartition.

Il est connu, du document FR-A1-2 632 593, un tel dispositif de distribution de l'air conditionné dans une salle de voyageur de véhicule ferroviaire. Dans ce dispositif, le conduit débouche à sa partie supérieure dans un espace délimité par deux parois parallèles adjacentes à la paroi latérale de la salle et s'étendant sur toute la longueur de la salle, cet espace débouchant à sa partie supérieure à l'intérieur du véhicule par des grilles situées sensiblement au niveau des fenêtres du véhicule. Habituellement, ce dispositif de distribution de l'air conditionné est installé de chaque côté de la salle de voyageur de manière à fournir de l'air conditionné aux différentes rangées de sièges disposées de chaque côté du couloir central.

Dans un tel cas, pour que la circulation d'air soit confortable, le flux d'air doit, à partir de la sortie des grilles, longer successivement la paroi latérale de la salle, être dévié par le plafond ou le porte-bagages pour se diriger presque à l'horizontal et rencontrer le flux provenant de l'autre côté de la salle dans le plan médian du couloir et descendre vers le plancher en restant dans ce plan.

Toutefois, la demanderesse a constaté qu'une telle installation présente l'inconvénient d'être sensible aux différences de débit qui existent entre les conduits d'alimentation des dispositifs de distribution disposés de chaque côté de la salle ainsi qu'à toute perturbation thermique ou physique qui tend à déséquilibrer la circulation d'air d'un côté du véhicule, ce qui génère pour les passagers des courants d'air désagréables.

Aussi, le but de la présente invention est de proposer un dispositif de distribution de l'air conditionné dans une salle de voyageur qui remédie à ces inconvénients en assurant un renouvellement d'air stable et homogène dans la salle des voyageurs afin d'offrir un confort amélioré dans la salle des voyageurs.

A cet effet, l'invention a pour objet un dispositif de distribution de l'air conditionné dans une salle de voyageurs d'un véhicule ferroviaire comprenant un conduit s'étendant en partie inférieure d'une paroi latérale de la salle, ce conduit comportant sur sa face latérale adjacente à l'intérieur de la salle des moyens de sortie d'air aménagés sur toute la longueur du conduit et conçus de manière à libérer un flux d'air longeant le plancher du véhicule, le conduit comportant dans sa partie supérieure des ouvertures débouchant dans un espace délimité latéralement par deux parois sensiblement parallèles adjacentes à la paroi latérale du véhicule, cet espace débouchant à sa partie supérieure à l'intérieur de la salle et comportant une paroi adjacente à l'intérieur de la salle présentant, près du conduit, une ou plusieurs fentes par lesquelles de l'air contenu dans la salle est aspiré, caractérisé en ce que les ouvertures débouchant dans l'espace sont réparties sur la longueur du conduit de telle sorte que soient créés des zones de sortie d'air, munies d'ouvertures, alternées avec des zones écrans, démunies d'ouvertures, et en ce que des cloisons s'étendant entre les parois parallèles sont disposées à la jonction entre les zones de sortie d'air et les zones écran.

Selon des modes particuliers de réalisation, le dispositif de distribution de l'air conditionné selon l'invention peut comprendre l'une ou plusieurs des caractéristiques suivantes prises isolément ou selon toutes les combinaisons techniquement possibles :
- la paroi, disposée vers l'intérieur de la salle, qui participe à la délimitation latérale des espaces en regard des sorties d'air dans lesquels les ouvertures débouchent, est une paroi s'étendant sur toute la longueur du conduit ;
- les fentes par lesquelles l'air contenu dans la salle est aspiré sont uniquement disposées en regard des zones de sortie d'air ;
- le véhicule est pourvu de fenêtres latérales disposées de part et d'autre de montants de séparation et les zones écran sont disposées en regard des montants de séparation, les zones de sortie d'air étant disposées en regard des fenêtres ;
- les espaces en regard des zones de sortie d'air débouchent à l'intérieur de la salle par des grilles disposées sensiblement au niveau des fenêtres du véhicule, ces grilles se prolongeant en regard des zones écrans par des grilles obturées ;
- les zones écran représentent de 10 à 25 % de la longueur totale du conduit.

On comprendra mieux les buts, aspects et avantages de la présente invention, d'après la description donnée ci-après d'un mode particulier de réalisation de l'invention, présenté à titre d'exemple non limitatif, en se référant aux dessins annexés, dans lesquels :
- la figure 1 est une vue schématique en perspective montrant un dispositif de distribution d'air conditionné selon un mode particulier de réalisation de l'invention, à l'intérieur d'un véhicule ferroviaire. Sur cette figure, la paroi interne du dispositif de distribution d'air est représentée partiellement arrachée ;
- la figure 2 est une vue en coupe axiale du véhicule ferroviaire de la figure 1 ;
- la figure 3 est une vue en coupe transversale du dispositif de distribution d'air selon la ligne III-III de la figure 2 ;
- la figure 4 est une section transversale du dispositif de distribution d'air selon la ligne IV-IV de la figure 2.

Pour faciliter la lecture du dessin, seuls les éléments nécessaires à la compréhension de l'invention ont été représentés. Les mêmes éléments portent les mêmes références d'une figure à l'autre.

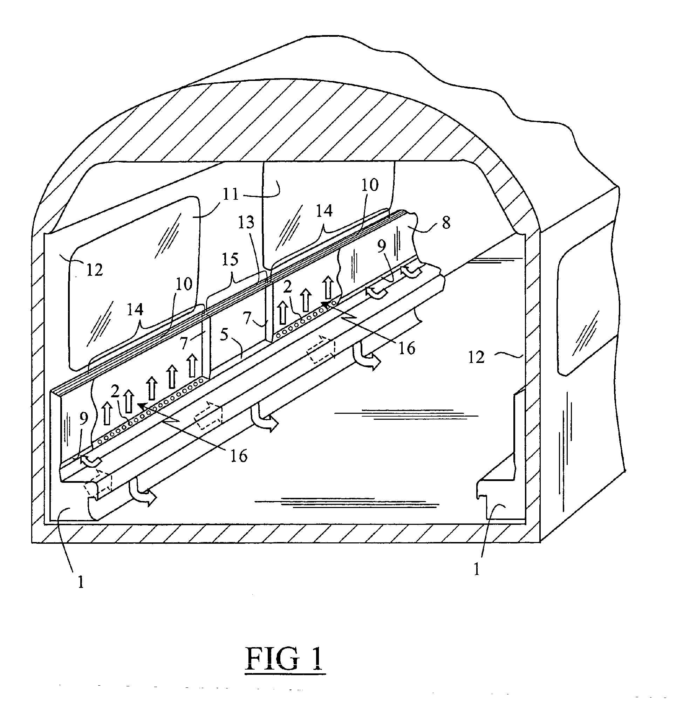

La figure 1 représente une voiture de véhicule ferroviaire comportant une salle destinée à accueillir des voyageurs sur plusieurs rangées de sièges, non représentés sur les figures, séparées par un couloir central. Cette salle présente deux parois latérales 12 munies de fenêtres 11 et reçoit à la partie inférieure de chacune de ces parois 12 un dispositif de distribution de l'air conditionné.

Dans la suite de la description, un seul dispositif de distribution de l'air conditionné sera décrit, les dispositifs de distribution de l'air conditionné au pied des deux parois 12 étant similaires et disposés de façon symétrique.

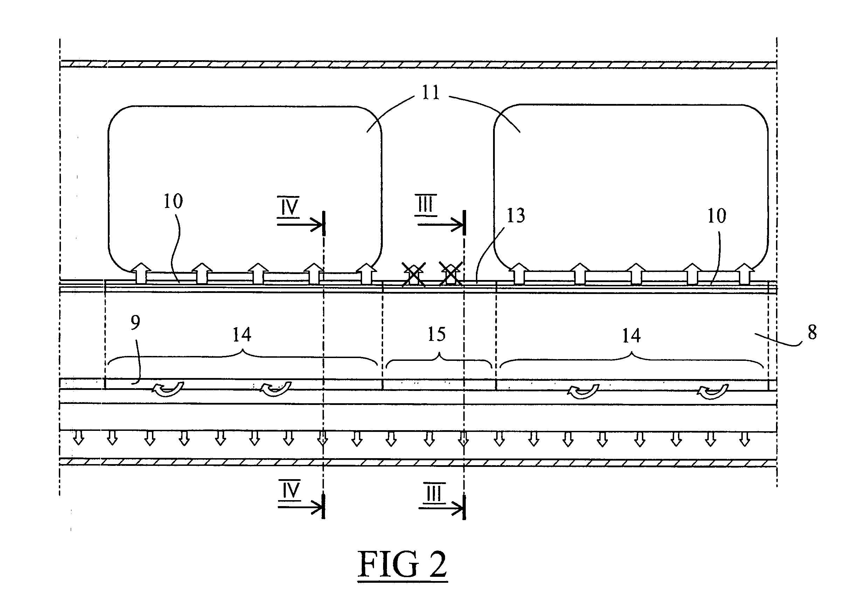

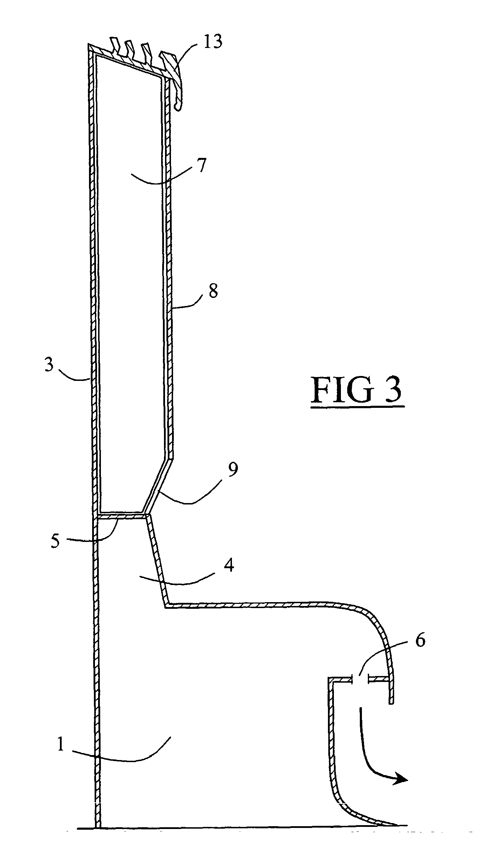

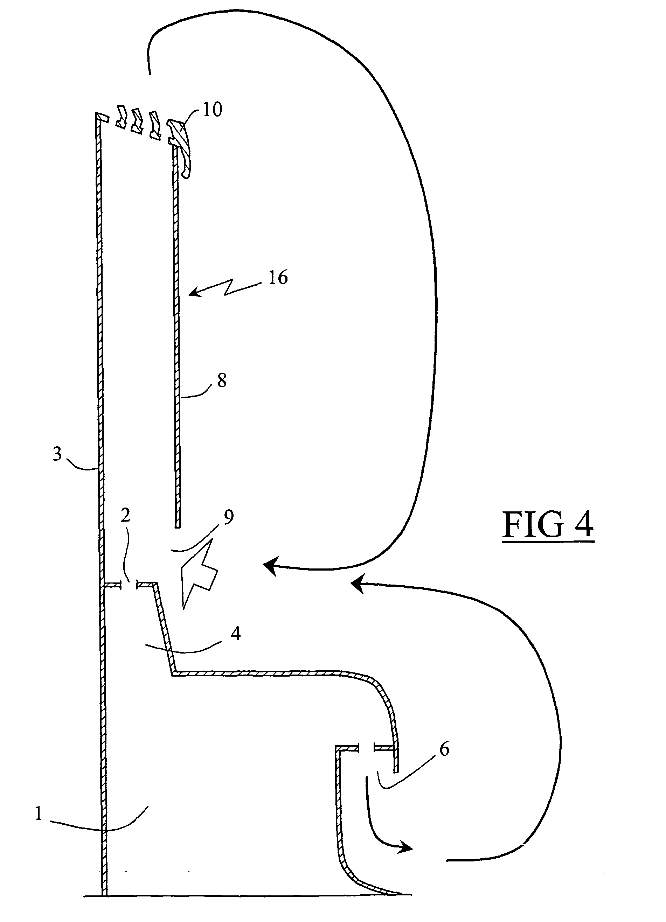

Conformément aux figures 1 à 4, le dispositif de distribution comporte un conduit 1 s'étendant le long de la paroi 12, sur toute la longueur de la salle, et est alimenté par un groupe de climatisation, non représenté, fournissant de l'air chaud ou froid à une extrémité du conduit suivant un flux représenté par des flèches en pointillés sur la figure 1.

Le conduit 1 comporte, sur sa face latérale adjacente à l'intérieur de la salle, une série d'orifices 6, en forme de trou circulaire, répartis régulièrement sur toute la longueur du conduit 1 et libérant un flux d'air en direction du plancher, ce flux d'air étant dévié par la base de la paroi du conduit 1.

Le conduit 1 comporte, dans sa partie supérieure adjacente à la paroi 12 de la salle, un goulet 4 s'étendant verticalement sur toute la longueur du conduit 1 et présentant une extrémité fermée par une paroi 5, cette paroi 5 comportant localement des ouvertures 2 en forme de trou circulaire débouchant dans un espace délimité latéralement par deux parois 3 et 8 sensiblement parallèles à la paroi latérale 12 de la salle et s'étendant, pour la paroi 8 disposée vers l'intérieur de la salle sur toute la longueur du conduit 1 et pour la paroi 3, au minimum en regard des zones de sortie d'air 14.

Conformément à l'invention, les ouvertures 2 sont réparties sur la paroi 5 de manière non uniforme afin de réaliser par alternance des zones de sortie d'air 14, munies de multiples ouvertures 2, et des zones écran 15, démunies d'ouvertures 2. Dans l'exemple représenté à la figure 1, les zones de sortie d'air 14 sont disposées en regard des fenêtres 11 et les zones écrans 15 sont disposées en regard des montants de séparation des fenêtres.

Des cloisons 7 s'étendant verticalement entre parois 3 et 8 sont placées à la jonction des zones de sortie d'air 14 et des zones écran 15, de manière à compartimenter l'espace entre les parois 3 et 8 de telle sorte que l'air injecté en regard des zones de sortie d'air 14 ne se propage pas transversalement en regard des zones écran 15. L'extrémité supérieure des parois 3 et 8 reçoit des grilles ajourées 10 en regard des zones de sortie d'air 14 et des grilles 13 indifféremment obturées ou ajourées en regard des zones écran 15, ces dernières présentant l'avantage de procurer une continuité esthétique au dispositif de distribution d'air. Les parois 3 et 8 et les cloisons 7 disposées de part et d'autre des zones de sortie d'air 14 délimitent ainsi des convecteurs 16 fournissant un flux d'air vertical au travers des grilles 10. Par ailleurs, la paroi 8 comprend à son extrémité inférieure des fentes 9 s'étendant au minimum sur la longueur des zones de sortie d'air 14 ou sur toute la longueur de la paroi 8 et permettant l'aspiration d'une partie de l'air de la salle à l'intérieur des convecteurs 16 du fait de la dépression crée par le flux d'air vertical traversant les ouvertures 2.

Le dispositif de distribution de l'air conditionné ainsi réalisé présente l'avantage d'assurer un bon mélange de l'air dans la salle et donc d'avoir une température des masses d'air plus homogène dans la salle. En effet, l'air expulsé au niveau des convecteurs se propage verticalement en direction du plafond mais également partiellement dans le sens longitudinal de la voiture du fait de l'interruption du souffle d'air de part et d'autre des convecteurs, ce qui assure une circulation naturellement stable et peu sensible aux petites différences de débit entre les deux dispositifs de distribution d'air disposés aux pieds des parois latérales de la salle.

De plus, le maintien d'un flux d'air, au niveau du plancher, équitablement réparti sur toute la longueur de la salle permet d'assurer une mise en température rapide du plancher, en particulier lors de basse température extérieure, et de maintenir au niveau de celui-ci des températures très proches de la température ambiante ce qui assure au niveau des pieds un très bon niveau de confort.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention. Ainsi, dans une variante de réalisation, les séries d'ouvertures circulaires disposées côte à côte pour alimenter en air les convecteurs ou bien encore pour envoyer un flux d'air en direction du plancher pourront être remplacées par une ouverture unique s'étendant sur une longueur équivalente à l'étendue de la série d'ouvertures.

## Revendications

1. Dispositif de distribution de l'air conditionné dans une salle de voyageurs d'un véhicule ferroviaire comprenant un conduit (1) s'étendant en partie inférieure d'une paroi latérale (12) de la salle, ce conduit (1) comportant sur sa face latérale adjacente à l'intérieur de la salle des moyens de sortie d'air (6) aménagés sur toute la longueur du conduit et conçus de manière à libérer un flux d'air longeant le plancher du véhicule, le conduit (1) comportant dans sa partie supérieure des ouvertures (2) débouchant dans un espace délimité latéralement par deux parois sensiblement parallèles (3, 8) adjacentes à la paroi latérale (12) du véhicule, cet espace débouchant à sa partie supérieure à l'intérieur de la salle et comportant une paroi adjacente à l'intérieur de la salle présentant, près du conduit (1), une ou plusieurs fentes (9) par lesquelles de l'air contenu dans la salle est aspiré, **caractérisé en ce que** lesdites ouvertures (2) sont réparties sur la longueur du conduit (1) de telle sorte que soient créées des zones de sortie d'air (14), munies d'ouvertures (2), alternées avec des zones écrans (15), démunies d'ouvertures (2), et **en ce que** des cloisons (7) s'étendant entre les parois parallèles (3, 8) sont disposées à la jonction entre les zones de sortie d'air (14) et les zones écran (15).

2. Dispositif de distribution de l'air conditionné dans une salle de voyageurs selon la revendication 1, **caractérisé en ce que** la paroi (8), disposée vers l'intérieur de la salle qui participe à la délimitation latérale des espaces dans lesquels les ouvertures (2) débouchent, est une paroi s'étendant sur toute la longueur du conduit (1).

3. Dispositif de distribution de l'air conditionné dans une salle de voyageurs selon la revendication 2, **caractérisé en ce que** les fentes (9) par lesquelles l'air contenu dans la salle est aspiré sont uniquement disposées en regard des zones de sortie d'air (14).

4. Dispositif de distribution de l'air conditionné dans une salle de voyageurs selon l'une quelconque des revendications 1 à 3, ledit véhicule étant pourvu de fenêtres latérales (11) disposées de part et d'autre de montants de séparation, **caractérisé en ce que** les zones écran (15) sont disposées en regard des montants de séparation et les zones de sortie d'air (14) sont disposées en regard des fenêtres (12).

5. Dispositif de distribution de l'air conditionné dans une salle de voyageurs selon l'une quelconque des revendications 2 à 4, **caractérisé en ce que** les espaces en regard des zones de sortie d'air (14) débouchent à l'intérieur de la salle par des grilles (10) disposées sensiblement au niveau des fenêtres (11) du véhicule, lesdites grilles (10) se prolongeant en regard des zones écrans (15) par des grilles obturées (13).

6. Dispositif de distribution de l'air conditionné dans une salle de voyageurs selon l'une quelconque des revendications 1 à 5, **caractérisé en ce que** les zones écran (15) représentent de 10 à 25 % de la longueur totale du conduit (1).

## Claims

1. Air-conditioning distribution device in a passenger car of a railway vehicle including a duct (1) that extends along the bottom of a lateral wall (12) of the car, this duct (1) comprising on its lateral face, adjacent to the inside of the car, air outlet means (6) installed along the entire length of the duct and designed such as to release a flow of air along the floor of the vehicle, the duct (1) comprising, at the top, openings (2) that open into a space delimited laterally by two substantially parallel walls (3, 8) adjacent to the lateral wall (12) of the vehicle, this space opening at the top into the car and comprising a wall that is adjacent to the inside of the car which has, near the duct (1), one or several slots (9) through which the air contained in the car is suctioned, **characterised in that** said openings (2) are distributed along the length of the duct (1) such as to create air outlet areas (14), equipped with openings (2), alternating with screen areas (15) that lack openings (2), and **in that** partitions (7) extending between the parallel walls (3, 8) are placed at the meeting point of the air outlet areas (14) and the screen areas (15).

2. Air-conditioning distribution device in a passenger car according to claim 1, **characterised in that** the wall (8) facing towards the inside of the car, which participates in the lateral delimitation of the spaces into which the openings (2) open, is a wall extending along the entire length of the duct (1).

3. Air-conditioning distribution device in a passenger car according to claim 2, **characterised in that** the slots (9) through which the air contained in the car is suctioned are only placed under the air outlet areas (14).

4. Air-conditioning distribution device in a passenger car according to any one of the claims from 1 to 3, said vehicle being equipped with lateral windows (11) placed on either side of separating posts, **characterised in that** the screen areas (15) are placed under the separating posts and the air outlet areas (14) are placed under the windows (12).

5. Air-conditioning distribution device in a passenger car according to any one of the claims from 2 to 4, **characterised in that** the spaces under the air outlet areas (14) that open into the car by means of grills (10) placed substantially level with the windows (11) of the vehicle are extended under the screen areas (15) by means of blocked grills (13).

6. Air-conditioning distribution device in a passenger car according to any one of the claims from 1 to 5, **characterised in that** the screen areas (15) represent 10% to 25% of the overall length of the duct (1).

## Patentansprüche

1. Vorrichtung zur Verteilung klimatisierter Luft in einem Passagierraum eines Schienenfahrzeugs, die einen Kanal (1) umfasst, der sich am unteren Teil einer Seitenwand (12) des Raums erstreckt, wobei dieser Kanal (1) auf seiner im Innern des Raums anschließenden Seitenfläche Mittel für den Luftausgang (6) umfasst, die auf der ganzen Länge des Kanals angebracht und dafür konzipiert sind, einen Luftstrom freizusetzen, der den Fußboden des Fahrzeugs entlang streicht, wobei der Kanal (1) in seinem oberen Teil Öffnungen (2) umfasst, die in einen Freiraum führen, der seitlich von zwei Wänden etwa parallel (3, 8) begrenzt wird, die an die Seitenwand (12) des Fahrzeugs anschließen, wobei dieser Raum in seinem oberen Teil in das Rauminnere führt und eine im Innern des Raums anschließende Wand umfasst, und in der Nähe des Kanals (1) einen oder zwei Schlitze (9) zeigt, durch die die im Raum enthaltene Luft angesaugt wird, **dadurch gekennzeichnet, daß** die besagten Öffnungen (2) so über die Länge des Kanals (1) verteilt sind, dass Luftaustrittszonen (14) geschaffen werden, die mit Öffnungen (2) versehen sind, die mit massiven Zonen (15) abwechseln, die keine Öffnungen (2) haben, und dass die Trennwände (7), die sich zwischen den parallelen Wänden (3, 8) erstrecken, am Übergang zwischen den Luftaustrittszonen (14) und den massiven Zonen (15) angeordnet sind.

2. Vorrichtung zur Verteilung klimatisierter Luft in einem Passagierraum nach Anspruch 1, **dadurch gekennzeichnet, dass** die zum Innern des Raums angeordnete Wand (8), die an der seitlichen Begrenzung der Freiräume beteiligt ist, in die die Öffnungen münden, eine sich über die gesamte Länge des Kanals (1) erstreckende Wand ist.

3. Vorrichtung zur Verteilung klimatisierter Luft in einem Passagierraum nach Anspruch 2, **dadurch gekennzeichnet, dass** die Schlitze (9), durch die die im Raum enthaltene Luft angesaugt wird, nur vor Luftaustrittszonen (14) angeordnet sind.

4. Vorrichtung zur Verteilung klimatisierter Luft in einem Passagierraum nach einem beliebigen der Ansprüche 1 bis 3, wobei das besagte Fahrzeug mit Seitenfenstern (11) versehen ist, die beidseitig von Trennholmen angeordnet sind, **dadurch gekennzeichnet, dass** die massiven Zonen (15) vor den Trennholmen angeordnet sind, und die Luftaustrittszonen (14) vor den Fenstern (12).

5. Vorrichtung zur Verteilung klimatisierter Luft in einem Passagierraum nach einem beliebigen der Ansprüche 2 bis 4, **dadurch gekennzeichnet, dass** die Freiräume vor den Luftaustrittszonen (14) im Rauminnern durch Gitter (10) münden, die auf Höhe der Fenster (11) des Fahrzeugs angeordnet sind, wobei sich die besagten Gitter (10) durch verschlossene Gitter (13) vor den massiven Zonen (15) fortsetzen.

6. Vorrichtung zur Verteilung klimatisierter Luft in einem Passagierraum nach einem beliebigen der Ansprüche 1 bis 5, **dadurch gekennzeichnet, dass** die massiven Zonen (15) von 10 bis 15% der Gesamtlänge des Kanals (1) darstellen.
